# EUROPEAN PATENT SPECIFICATION

(11) **EP 3 085 670 B1**
(45) Date of publication and mention of the grant of the patent: **04.12.2019**
(21) Application number: 15472001.5
(22) Date of filing: 21.04.2015
(51) Int. Cl.: C02F 1/34, C02F 1/36, A22C 17/08, A22C 25/02

(54) **HYDRODYNAMIC CAVITATION WATER TREATMENT DEVICE WITH ULTRASONIC PRESSURE WAVES GENERATION**
WASSERBEHANDLUNGSVORRICHTUNG DURCH HYDRODYNAMISCHE KAVITATION MIT ULTRASCHALLDRUCK WELLENERZEUGUNG
DISPOSITIF DE TRAITEMENT DES EAUX À L'AIDE DE CAVITATION HYDRODYNAMIQUE AVEC PRODUCTION DES ONDES DE PRESSION SUPERSONIQUES

(43) Date of publication of application: 26.10.2016
(73) Proprietor: Treelium SA, 6855 Stabio (CH); M+U Technologies Ltd., 1680 Sofia (BG)
(72) Inventor: KATZAROV, Jivko, 1680 Sofia (BG)
(74) Representative: Zardi, Marco

(56) References cited:
- WO-A1-2004/060542
- WO-A2-2012/003815
- US-A1- 2010 072 143
- US-A1- 2013 021 868

## Description

### Field of application

The invention relates to a water treatment device. In particular, the invention relates to a hydrodynamic water treatment device for domestic and industrial uses.

### Prior Art

Water flowing within the distribution networks (also termed "piped water") contains relevant amounts of chemical additives with disinfectant and antibacterial properties for removing undesirable chemicals and biological contaminants. Said additives however do not remove suspended substances such as calcium salts and heavy metals.

Said suspended substances are harmful both for users and installations, e.g. heavy metals bind to vital cellular components and calcium salts form limestone scale which is known to be detrimental for piping, equipment, etc. Furthermore, the strong content of limestone scale reduces the solvent and wetting power of water, thus the cleaning capacity, leading to use of larger quantities of surfactants with a negative environmental impact. For the above reasons, the need of removing said suspended substances is strongly felt.

Therefore, in order to further improve the quality of piped water and produce water suitable for a specific purpose (e.g. human consumption, medical, pharmacological, chemical and industrial applications), additional on-site purification has been proposed in the prior art. For example, known on-site purification processes include filtration or disinfection or decalcification by means of devices which are installed directly in the water pipes.

Chemical-based devices use chemicals which contact the flowing water and remove the aforementioned suspended substances by interaction therewith. However, the use of chemicals introduces environmental concerns and requires a periodic refill.

Devices using magnets are a non-chemical alternative widely known in the art. They allow partially remove limestone scale in a greener way than chemical-based devices, by passing water through a magnetic field. However, the magnetic treatment has a relatively low effect; this disadvantage can be alleviated by producing a strong turbulence which however would increase the hydraulic resistance and pressure loss; another disadvantage is a strong dependence of the effectiveness of said devices from the water hardness.

Another class of purification devices is based on the galvanic process technology and operates by means of a sacrificial anode made of zinc provided with swirling elements. Said elements give the water a swirling motion and lime particles are discharged with the water flowing out of the device. However this technique requires a power source and the zinc anode needs to be periodically replaced.

A prior art device for killing microorganisms in liquid is described in WO-A-2012/003815.

### Summary of the invention

The invention aims to overcome the aforementioned problems and drawbacks of the prior art and to provide an effective water treatment device operating without chemicals, magnets and external power source.

In greater detail, the invention aims to provide a water treatment device with improved performances, longer lifetime, elevated resistance to wear and corrosion, ability to be used in water systems of different types and dimensions. Moreover, further object of the invention is to provide a water treatment device able to improve some properties of the water, i.e. decreased tendency of forming limestone, reduced surface tension, increased wetting properties and greater bacterial inhibition.

The idea forming the basis of the invention is to provide a hydrodynamic device taking advantage of the sole pressure variations of the liquid flowing therein, namely of the so-called hydrodynamic effect.

These objects are achieved with a water treatment device and a purification process according to the attached independent claims. Preferred embodiments are disclosed in the dependent claims.

Said device includes a body defining a duct for a water flow and a bladed assembly contained in said body and contacting said water flow. Said bladed assembly comprises a plurality of blades aligned along the flow direction and rotated one to another by a pitch angle so that a tortuous path for the water flow traversing the duct is generated between the blades. The device further comprises a convergent-divergent section downstream said tortuous path.

Each of said blades partially obstructs the cross section of a water passage of said duct; the adjacent blades, being rotated one relative to another, obstruct different portions of said passage, to define said tortuous path.

The convergent-divergent section comprises a convergent portion and a divergent portion. In a preferred embodiment, the outlet surface at the end of the divergent portion is greater than the inlet surface of the convergent portion.

According to a preferred embodiment, said convergent-divergent section further comprises an intermediate portion between said convergent portion and said divergent portion. More preferably, said intermediate portion has a constant cross section, equal to the outlet section of the convergent portion which is also the smallest section through the convergent-divergent section (throat section).

In a preferred embodiment, said convergent-divergent section is part of an outlet fitting of the device. For example said outlet fitting is screwed to the body of the device. According to another embodiment, said convergent-divergent section can be arranged differently, e.g. being part of the bladed assembly.

In some embodiments, said duct has may include one or more restrictions causing Venturi effect, said restrictions being upstream or downstream said plurality of blades.

A preferred form of the above mentioned blades is represented by a rectangular or substantially rectangular shape. In a preferred embodiment the blades are substantially rectangular shaped having two straight long sides and two rounded shorts sides. These blades can be regarded as discs cut by two parallel lines.

The surface of the blades facing the water flow is preferably smooth.

Said blades are rotated one to another by a pitch angle of 49°. The pitch angle and its sense are constant along the sequence of the blades, e.g. each blade is rotated clockwise (or counterclockwise) by the pitch angle relative to the preceding one, leading to a constant angular offset between adjacent blades throughout the bladed assembly.

The constant-pitch angled arrangement of the blades defines a spiral path for the flow of water, ensuring an optimal compromise between an adequate flow rate and hydrodynamic effect of the blades on the flow.

Preferably, said blades are secured to a supporting tube extending along at least part of the length of the duct. More preferably, said supporting tube passes through a central axis of the blades.

Said blades may be supported solely by said tube. In some embodiments, the blades may comprise interlocking parts so that each blade is also interlocked with adjacent blades. Such embodiment may be helpful to keep the blades in a stable position during the operation of the device.

In order to accomplish the need of high reliability and long life of the device, the external body and the bladed assembly are preferably realized with anticorrosion metal, more preferably with stainless steel.

The device of the invention may be realized in different sizes, for domestic use or for use in a larger water network or for industrial use. For example the device of the invention for a domestic use may be realized with a diameter such as 1" or smaller and rated for a flow rate of some cubic meters per hour.

The applicant has found that water passed through treatment device of the invention shows decreased viscosity, reduced surface tension and increased wetting properties.

Without being bound the theory, the above effects are believed to originate from breaking of some hydrogen bonds caused by creation and collapse of microbubbles in the water flow, together with the turbulent flow and tortuous path of water induced by the assembly, and also by depressurization and pressurization through the convergent-divergent. Said creation and collapse of microbubbles induces mechanical perturbations affecting the intermolecular hydrogen bonds and further resulting in a variation of macroscopic properties, such as viscosity and surface tension.

Reduced surface tension allows for a greater exchange surface between water and any hydrophilic substances (e.g. hydrophilic portions of the molecules forming soaps and detergents) and greater solvent power and wettability. Hence water passed through the device of the invention shows a better cleaning capacity and allow reduce the use of detergents and surfactants. This advantage is particularly important for domestic use.

In addition, the above mechanical perturbations hinder limestone scale formation from calcium salts and its precipitation on pipes and other installations. The applicant found that the natural tendency of calcium molecules to aggregate into the crystalline form of calcite (which is responsible for limestone scale formation) is hindered by the treatment of the invention, to the advantage of crystalline form of aragonite.

Due to the low tendency of aragonite to precipitate into solid form and its significantly poorer cohesion and crystallographic growth than calcite, the crystals of this polymorph remain more easily suspended in the flow of water and are not able to agglomerate and grow in size. This is a great advantage for the operation of pipes and water plants.

The applicant found also that at the exit of the above described device, ultrasonic pressure waves are generated within the water. The term of ultrasonic waves denotes waves having a frequency of at least 20 kHz. In a preferred embodiment, the frequency of said waves is 21 kHz.

Said waves are due to alternating flow contractions and flow expansions, the former resulting in pressure drops within the moving water and formation of vapour filled gas bubbles and the latter resulting in a pressure increase above the vapour pressure and collapse of said bubbles.

Hence, a further aspect of the invention is a method for treating water inducing ultrasonic waves during passage of the water through the bladed assembly and the convergent-divergent section.

Further advantages of the invention are: the ease of application, the construction entirely in stainless steel and the lack of need for external power, maintenance, replacing parts and cleaning.

The water treatment device of the invention is suitable for both civil and industrial applications, e.g. agricultural, mechanical, food, medical fields. For example, the device of the invention is advantageously used in calorifiers, compressors, heaters cooling towers, evaporators, boilers, humidifiers, heat exchangers.

Further advantages will emerge from the following description which is given as a non-limitative example.

### Brief description of the figures

Fig. 1 shows a diagrammatic longitudinal section of a water treatment device according to an embodiment of the invention.
Fig. 2 is a diagrammatic cross-section of the device of Fig. 1.
Fig. 3 is a front view of one of the blades of the device according to Fig. 1.
Fig. 4 shows a lateral view of the blade of Fig. 3.

### Detailed description of preferred embodiments

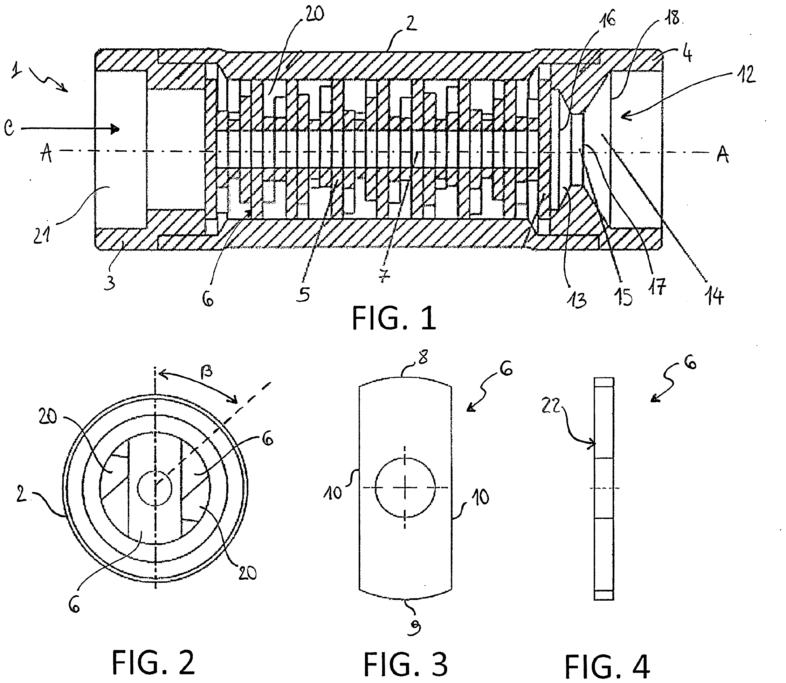

Fig. 1 shows a cross section of a water treatment device 1 with longitudinal axis A-A and comprising a cylindrical body 2, an inlet fitting 3, an outlet fitting 4 and an inner assembly 5.

Said assembly 5 provides impact surfaces for the water flow C, thus defining a desired path for the water entering the device 1 through the inlet fitting 3. More in detail, the assembly 5 comprises a plurality of blades 6 which are fixed to a common supporting tube 7 passing through a central axis of the blades.

Each blade 6 is rotated by a constant pitch angle β of 49 degrees relatively to the preceding one in a given sense, so as to provide a tortuous path for the flow of water, as visible in Fig. 2.

Fig. 2 illustrates an embodiment where each blade 6 is offset by a pitch angle β of 49 degrees relative to the preceding one. This angled arrangement defines a spiral path 20 limited by the surfaces of the blades 6 and the inner surface of the cylindrical body 2.

Preferably the number of blades 6 is 18.

A preferred form of the blades 6 is illustrated in Figs. 3-4. In this preferred form, each blade 6 is a substantially rectangular plate with a rounded upper side 8 and a rounded lower side 9. This shape of blades 6 can be regarded as the result of cutting a disc with the two parallel lines 10. The surface 22 of the blades 6 facing the water flow (Fig. 4) is smooth.

The outlet fitting 4 comprises a convergent-divergent section 12 which is traversed by the water flow after the tortuous passage through the spiral path 20.

The convergent-divergent section 12 has a convergent portion 13 and a divergent portion 14; preferably the section 12 comprises also an intermediate portion 15 with a constant cross section, between the convergent portion 13 and the divergent portion 14. Said convergent-divergent section 12 has an inlet surface 16, at the inlet of the convergent portion 13 and facing the bladed assembly 5; a throat surface 17 having the smallest cross section, and an outlet surface 18 at the end of the divergent portion, facing the outlet of the device 1. Preferably the outlet surface 18 is greater than the inlet surface 16. More preferably, the throat surface 17 is significantly smaller than the inlet surface 16, preferably at least half the surface 16 and more preferably at least 4 times smaller.

The inlet fitting 3 comprises an opening 21 for the entry of water C.

In a preferred embodiment, the width of blades 6 is in the range 0.2 to 0.7 D where D is the internal diameter of the cylindrical body 2 where the bladed assembly is fitted. For a device having a diameter ranging from around 29 mm (1/2 inch) to around 73 mm (2 inches), the width of the blades 6 is preferably in the range 4 mm to 10 mm. More preferably, for example, a ½" device is realized with 4 mm wide blades and a 2" device is realized with 10 mm wide blades.

The water treatment device 1 works as follows. Water enters the device 1 following the direction indicated by arrow C in Fig. 1 and flows along the spiral path 20 impacting against the surface of the blades 6, which induce a swirling motion.

The water flow leaving the bladed assembly 5 enters the convergent-divergent 12 where it is first accelerated and depressurized in the convergent portion 13 and subsequently re-pressurized in the divergent portion 14. Due to the geometry of the convergent-divergent 12, the final pressure after traversing the convergent-divergent 12 may be greater than the starting pressure at the inlet surface 16.

The applicant has found that when the device 1 is fed with water at appropriate flow rate and pressure, the outlet flow exhibits ultrasonic pressure waves generated during the passage through the bladed assembly 5 and convergent-divergent section 12. In particular, in a preferred embodiment said pressure waves have a frequency of around 21 kHz.

It is believed that said ultrasonic waves are the result of the strong turbulent flow generated by the assembly 5 and the acceleration-pressurization through the convergent-divergent 12. In particular, microbubbles of air may easily form in the convergent portion 13 where pressure drops, and said microbubbles then collapse through the divergent portion 14 where the pressure raises again. This induces a form of hydrodynamic cavitation process leading to the above ultrasonic waves travelling through the water flow. These waves are believed to be responsible of the above described effects, such as decreased tendency of forming limestone, reduced surface tension, increased wetting properties.

## Claims

1. Water treatment device comprising:
a body defining a duct (2) for a water flow;
a bladed assembly (5) contained in said body and contacting said water flow, said bladed assembly comprising a plurality of blades (6) aligned along the flow direction and rotated one to another by a pitch angle so that a tortuous path for said water flow traversing the duct is generated between the blades,
a convergent-divergent section (12) downstream said tortuous path and traversed by the water flow, wherein
said blades (6) are rotated one to another by a pitch angle of 49 degrees.

2. Device according to claim 1, wherein:
each of said blades (6) partially obstructs the cross section of a water passage of said duct, and adjacent blades (6), being rotated one relative to another, obstruct different portions of said passage, so that said tortuous path is defined from one blade to another.

3. Device according to claim 1 or 2, wherein said convergent-divergent section (12) comprises a convergent portion (13), a divergent portion (14) and further comprises an intermediate portion (15) with a constant cross section equal to the outlet section of the convergent portion, between said convergent portion (13) and said divergent portion (14).

4. Device according to any one of the previous claims, wherein said convergent-divergent section has an inlet surface (16) at the inlet of the convergent portion (13) and an outlet-surface (18) at the end of the divergent portion, said outlet surface (18) being greater than said inlet surface (16).

5. Device according to any one of the previous claims, comprising an outlet fitting (4), wherein said convergent-divergent section (12) is part of the said outlet fitting (4).

6. Device according to claim 5, wherein said blades (6) have a rectangular or substantially rectangular shape.

7. A device according to claim 6, said blades having two straight long sides (10) and two rounded shorts sides (8, 9).

8. Device according to any one of the previous claims, wherein said blades (6) are arranged so as to define a spiral path (20) for the water flow.

9. Device according to any one of the previous claims, wherein said blades are secured to a supporting tube (7) extending along at least part of the length of the duct (2).

10. Device according to claim 9, wherein said supporting tube passes through a central axis of said blades.

11. Device according to any one of the previous claims, wherein said blades are interconnected to one another through interlocking parts.

12. Device according to any one of the previous claims, wherein the external body and the bladed assembly are made of anticorrosion metal, preferably stainless steel.

13. Method for treating water, wherein water passes through water treatment device according to claim 1,
said method being **characterized in that** it induces ultrasonic pressure waves to the water during passage through the bladed assembly (5) and the convergent-divergent section (12).

14. Method according to claim 13, wherein said pressure waves have a frequency of around 21 kHz.

## Patentansprüche

1. Wasserbehandlungsvorrichtung, umfassend:
einen Körper, der einen Kanal (2) für einen Wasserdurchfluss definiert;
eine beschaufelte Anordnung (5), die in dem Körper enthalten ist und mit dem Wasserdurchfluss in Kontakt steht, wobei die beschaufelte Anordnung eine Mehrzahl von Schaufeln (6) umfasst, die entlang der Durchflussrichtung ausgerichtet sind und zueinander um einen Steigungswinkel gedreht sind, sodass zwischen den Schaufeln ein gewundener Weg für den Wasserdurchfluss erzeugt wird, der den Kanal quert,
einen konvergent-divergenten Abschnitt (12) stromabwärts des gewundenen Wegs und gequert durch den Wasserdurchfluss, wobei
die Schaufeln (6) zueinander um einen Steigungswinkel von 49 Grad gedreht sind.

2. Vorrichtung nach Anspruch 1, wobei:
jede der Schaufeln (6) den Querschnitt eines Wasserdurchlaufs des Kanals teilweise blockiert und benachbarte Schaufeln (6), die in Bezug aufeinander gedreht sind, unterschiedliche Abschnitte des Durchlaufs blockieren, sodass der gewundene Weg von einer Schaufel zu einer anderen definiert ist.

3. Vorrichtung nach Anspruch 1 oder 2, wobei der konvergent-divergente Abschnitt (12) einen konvergenten Abschnitt (13) und einen divergenten Abschnitt (14) umfasst und weiter einen Zwischenabschnitt (15) mit einem konstanten Querschnitt, der gleich dem Auslassabschnitt des konvergenten Abschnitts ist, zwischen dem konvergenten Abschnitt (13) und dem divergenten Abschnitt (14) umfasst.

4. Vorrichtung nach einem der vorhergehenden Ansprüche, wobei der konvergent-divergente Abschnitt eine Einlassfläche (16) an dem Einlass des konvergenten Abschnitts (13) und eine Auslassfläche (18) an dem Ende des divergenten Abschnitts aufweist, wobei die Auslassfläche (18) größer als die Einlassfläche (16) ist.

5. Vorrichtung nach einem der vorhergehenden Ansprüche, umfassend einen Auslassanschluss (4), wobei der konvergent-divergente Abschnitt (12) Teil des Auslassanschlusses (4) ist.

6. Vorrichtung nach Anspruch 5, wobei die Schaufeln (6) eine rechteckige oder im Wesentlichen rechteckige Form aufweisen.

7. Vorrichtung nach Anspruch 6, wobei die Schaufeln zwei gerade lange Seiten (10) und zwei gerundete kurze Seiten (8, 9) aufweisen.

8. Vorrichtung nach einem der vorhergehenden Ansprüche, wobei die Schaufeln (6) derart angeordnet sind, dass sie einen Spiralweg (20) für den Wasserdurchfluss definieren.

9. Vorrichtung nach einem der vorhergehenden Ansprüche, wobei die Schaufeln an einem Stützrohr (7) befestigt sind, das sich entlang zumindest eines Teils der Länge des Kanals (2) erstreckt.

10. Vorrichtung nach Anspruch 9, wobei das Stützrohr durch eine Mittelachse der Schaufeln verläuft.

11. Vorrichtung nach einem der vorhergehenden Ansprüche, wobei die Schaufeln durch ineinander greifende Teile miteinander verbunden sind.

12. Vorrichtung nach einem der vorhergehenden Ansprüche, wobei der Außenkörper und die beschaufelte Anordnung aus einem korrosionsbeständigen Material hergestellt sind, vorzugsweise Edelstahl.

13. Verfahren zum Behandeln von Wasser, wobei Wasser durch eine Wasserbehandlungsvorrichtung nach Anspruch 1 fließt,
das Verfahren **dadurch gekennzeichnet, dass** während des Fließens durch die beschaufelte Anordnung (5) und den konvergent-divergenten Abschnitt (12) Ultraschalldruckwellen in das Wasser eingebracht werden.

14. Verfahren nach Anspruch 13, wobei die Druckwellen eine Frequenz von ungefähr 21 kHz haben.

## Revendications

1. Dispositif de traitement des eaux, comprenant :
un corps définissant une canalisation (2) pour un courant d'eau,
un assemblage à pales (5) contenu dans ledit corps et étant au contact du dit courant d'eau, ledit assemblage à pales comprenant une pluralité de pales (6) alignées le long de la direction du courant et mises en rotation les unes par rapport aux autres selon un angle d'attaque de sorte qu'une trajectoire tortueuse pour ledit courant d'eau traversant la canalisation est générée entre les pales,
une section convergente-divergente (12) en aval de la dite trajectoire tortueuse et traversée par le courant d'eau, où
les dites pales (6) sont mises en rotation les unes par rapport aux autres selon un angle d'attaque de 49 degrés.

2. Dispositif selon la revendication 1, **caractérisé en ce que** :
chacune des dites pales (6) obstrue partiellement la coupe transversale du passage de l'eau de ladite canalisation, et des pales adjacentes (6), mises en rotation les unes par rapport aux autres, obstruent différentes parties dudit passage, de sorte que la dite trajectoire tortueuse est définie d'une pale à une autre.

3. Dispositif selon la revendication 1 ou 2, **caractérisé en ce que** ladite section convergente-divergente (12) comprend une partie convergente (13), une partie divergente (14) et comprend en outre une partie intermédiaire (15) avec une coupe transversale constante égale à la section de sortie de la partie convergente, entre ladite partie convergente (13) et ladite partie divergente (14).

4. Dispositif selon l'une quelconque des revendications précédentes, **caractérisé en ce que** ladite section convergente-divergente présente une surface d'entrée (16) à l'entrée de la partie convergente (13) et une surface de sortie (18) à l'extrémité de la partie divergente, ladite surface de sortie (18) étant plus grande que ladite surface d'entrée (16).

5. Dispositif selon l'une quelconque des revendications précédentes, comprenant un raccord de sortie (4), dans lequel ladite section convergente-divergente (12) fait partie dudit raccord de sortie (4).

6. Dispositif selon la revendication 5, **caractérisé en ce que** lesdites pales (6) ont une forme rectangulaire ou sensiblement rectangulaire.

7. Dispositif selon la revendication 6, **caractérisé en ce que** lesdites pales ont deux côtés longs linéaires (10) et deux côtés courts arrondis (8, 9).

8. Dispositif selon l'une quelconque des revendications précédentes, **caractérisé en ce que** lesdites pales (6) sont agencées de manière à définir une trajectoire en spirale (20) pour le courant d'eau.

9. Dispositif selon l'une quelconque des revendications précédentes, **caractérisé en ce que** lesdites pales sont fixées à un tube de support (7) s'étendant le long d'au moins une partie de la longueur de la canalisation (2).

10. Dispositif selon la revendication 9, **caractérisé en ce que** ledit tube de support passe à travers un axe central desdites pales.

11. Dispositif selon l'une quelconque des revendications précédentes, **caractérisé en ce que** les dites pales sont interconnectées les unes aux autres par le biais de pièces qui s'enclenchent.

12. Dispositif selon l'une quelconque des revendications précédentes, **caractérisé en ce que** le corps externe et l'assemblage à pales sont faits d'un métal anticorrosion, de préférence en acier inoxydable.

13. Procédé de traitement des eaux, dans lequel l'eau passe à travers un dispositif de traitement des eaux selon la revendication 1,
ledit procédé étant **caractérisé en ce qu'**il crée des ondes de pression à ultrasons dans l'eau pendant son passage à travers l'assemblage à pales (5) et la section convergente-divergente (12).

14. Procédé selon la revendication 13, **caractérisé en ce que** lesdites ondes de pression ont une fréquence d'environ 21 kHz.
